(19) Europäisches Patentamt European Patent Office Office européen des brevets

(11) **EP 4 086 751 B1**

(12) **FASCICULE DE BREVET EUROPEEN**

(45) Date de publication et mention de la délivrance du brevet:
**31.01.2024 Bulletin 2024/05**

(21) Numéro de dépôt: **22170136.0**

(22) Date de dépôt: **26.04.2022**

(51) Classification Internationale des Brevets (IPC):
**G06F 3/16** *(2006.01)* **G06F 3/0488** *(2022.01)*

(52) Classification Coopérative des Brevets (CPC):
**G06F 3/165; G06F 3/03547; G06F 3/0436; G06F 3/04847; G06F 3/04883; G06F 3/04886; G06F 3/167;** G06F 2200/1636; G06F 2203/0339; G06F 2203/04103

(54) **COMMANDE PAR GLISSEMENT SUR DES BOUTONS VIRTUELS**

STEUERUNG DURCH WISCHEN AUF VIRTUELLEN SCHALTFLÄCHEN

CONTROL BY SLIDING ON VIRTUAL BUTTONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2021 FR 2104552**

(43) Date de publication de la demande:
**09.11.2022 Bulletin 2022/45**

(73) Titulaire: **Sagemcom Broadband SAS
92270 Bois-Colombes (FR)**

(72) Inventeur: **BOUVIGNE, Gabriel
92500 RUEIL MALMAISON (FR)**

(74) Mandataire: **Lavaud, Thomas
Cabinet Boettcher
5, rue de Vienne
75008 Paris (FR)**

(56) Documents cités:
**EP-A1- 3 149 966 EP-A2- 2 393 305
US-B1- 10 147 441**

## Description

L'invention concerne le domaine des équipements de restitution audio comprenant au moins un haut-parleur et des microphones.

ARRIERE PLAN DE L'INVENTION

Certains équipements électroniques récents intègrent non seulement un ou des haut-parleurs pour restituer des signaux audio, mais aussi un ou des microphones pour capturer des signaux sonores, et sont capables d'interagir avec l'utilisateur par la voix. Ces équipements peuvent ainsi acquérir des commandes émises oralement par l'utilisateur, et répondre en émettant des signaux sonores à destination de l'utilisateur.

On connaît par exemple des enceintes connectées qui peuvent être utilisées pour mettre en œuvre le procédé de reconnaissance vocale d'un assistant personnel virtuel. On connaît aussi par exemple des boîtiers décodeurs (ou *set-top boxes* en anglais) qui intègrent un dispositif d'assistance vocale.

Un tel équipement réalise classiquement un procédé de formation de voies qui lui permet de focaliser la direction dans laquelle il écoute et d'ignorer les sons provenant d'une direction autre que celle de l'utilisateur (on parle de « *beamforming* » en anglais) . Le procédé de formation de voies nécessite plusieurs microphones.

Un tel équipement comporte aussi généralement un ou des boutons permettant un accès rapide à certaines fonctionnalités : démarrage d'une interaction vocale avec l'utilisateur, activation ou désactivation d'un mode de veille, marche/arrêt, réglage du volume, appairage *Bluetooth,* etc. Par exemple l'interaction avec l'utilisateur peut inclure la détection sonore du passage d'un doigt sur un appareil auditif (EP 3 149 966 A1).

OBJET DE L'INVENTION

L'invention a pour objet de réduire le coût d'un équipement de restitution audio tel que précédemment décrit et d'améliorer les interactions de l'utilisateur avec ledit équipement de restitution audio.

RESUME DE L'INVENTION

En vue de la réalisation de ce but, on propose un équipement de restitution audio comprenant :

- un boîtier sur lequel sont formés des trous, et des microphones positionnés à l'intérieur du boîtier, chaque microphone étant en communication acoustique avec l'extérieur via l'un des trous ;
- un haut-parleur ;
- des moyens d'émission agencés pour émettre via le haut-parleur un signal sonore de détection ;
- au moins un composant de traitement agencé pour :

    o acquérir des signaux audio de détection produits par les microphones à partir d'une capture du signal sonore de détection ;
    o détecter à partir des signaux audio de détection une succession d'occultations d'au moins deux microphones distincts ;
    o analyser la succession d'occultations de manière à détecter un glissement de commande réalisé sur le boîtier par un utilisateur entre au moins deux microphones distincts ;
    o commander au moins une action prédéterminée suite à la détection dudit glissement de commande.

L'équipement de restitution audio selon l'invention comporte donc des « boutons virtuels », qui comprennent chacun un microphone et un trou via lequel le microphone communique avec l'extérieur.

Les boutons virtuels permettent à l'utilisateur de commander des actions prédéterminées en faisant glisser son doigt sur le boîtier de l'équipement de restitution audio.

Lorsque l'équipement est équipé de microphones et d'un haut-parleur qui sont utilisés pour une autre fonction, comme c'est le cas pour une enceinte connectée pouvant être utilisée pour réaliser le procédé de reconnaissance vocale d'un assistant personnel virtuel, la mise en oeuvre de ces boutons virtuels est très peu onéreuse puisque les boutons virtuels peuvent utiliser les microphones et le haut-parleur « préexistants ». On réduit donc de manière importante le coût de fabrication de l'équipement.

Il est aussi possible d'ajouter « a posteriori » des boutons virtuels supplémentaires sur des équipements déjà conçus voire même déjà déployés.

Comme la commande nécessite de faire glisser le doigt sur le boîtier, il n'est pas nécessaire de taper sur le boîtier. Ainsi, la détection réalisée ne dépend ni des caractéristiques du doigt (et notamment de la longueur de l'ongle du doigt) ni d'une force avec laquelle le doigt taperait sur le boîtier.

Par ailleurs, la détection ne nécessite pas un niveau de bruit ambiant particulier, et fonctionne donc même si l'environnement est complètement silencieux.

On note de plus que la commande par glissement est particulièrement adaptée pour des actions à réponse progressive, comme par exemple le réglage du volume de restitution sonore. Les interactions entre l'utilisateur et l'équipement de restitution audio sont donc améliorées.

On propose aussi un équipement de restitution audio tel que précédemment décrit, le composant de traitement étant agencé pour :

- détecter une première occultation d'un premier microphone ;
- si une première durée de la première occultation est inférieure à une première durée prédéfinie, détecter une deuxième occultation d'un deuxième microphone distinct du premier microphone ;
- si une deuxième durée entre une fin de la première occultation et un début de la deuxième occultation est inférieure à une deuxième durée prédéfinie, détecter le glissement de commande.

On propose aussi un équipement de restitution audio tel que précédemment décrit, le composant de traitement étant agencé pour comparer le glissement de commande avec au moins un glissement prédéfini d'une liste prédéfinie, pour déterminer un glissement prédéfini particulier auquel correspond le glissement de commande, et pour commander au moins une action prédéterminée associée au glissement prédéfini particulier.

On propose aussi un équipement de restitution audio tel que précédemment décrit, dans lequel chaque glissement prédéfini correspond à une succession d'occultations prédéfinie de microphones disposés successivement.

On propose aussi un équipement de restitution audio tel que précédemment décrit, dans lequel les microphones sont alignés, les glissements prédéfinis étant des glissements linéaires.

On propose aussi un équipement de restitution audio tel que précédemment décrit, dans lequel les microphones sont disposés de manière circulaire, les glissements prédéfinis étant des glissements circulaires.

On propose aussi un équipement de restitution audio tel que précédemment décrit, dans lequel au moins un glissement prédéfini associé à une action prédéterminée particulière est défini de manière à débuter nécessairement par une occultation d'un microphone initial prédéfini et/ou de manière à s'achever nécessairement par une occultation d'un microphone final prédéfini.

On propose aussi un équipement de restitution audio tel que précédemment décrit, dans lequel la liste prédéfinie comprend plusieurs glissements prédéfinis dans un même sens mais de longueurs différentes.

On propose aussi un équipement de restitution audio tel que précédemment décrit, dans lequel l'action prédéterminée associée à l'un au moins des glissements prédéfinis est une action à réponse progressive.

On propose aussi un équipement de restitution audio tel que précédemment décrit, dans lequel un niveau de réponse de l'action à réponse progressive dépend de la longueur dudit glissement prédéfini.

On propose aussi un équipement de restitution audio tel que précédemment décrit, dans lequel les glissements prédéfinis comprennent des glissements prédéfinis dans un premier sens et des glissements prédéfinis dans un deuxième sens, un glissement prédéfini dans le premier sens étant associé à une augmentation d'un niveau de réponse de l'action à réponse progressive alors qu'un glissement prédéfini dans le deuxième sens est associé à une réduction du niveau de réponse de l'action à réponse progressive.

On propose aussi un équipement de restitution audio tel que précédemment décrit, dans lequel une variation d'un niveau de réponse de l'action à réponse progressive est plus importante si le glissement prédéfini est suivi d'une occultation maintenue d'un microphone à la fin du glissement prédéfini.

On propose aussi un équipement de restitution audio tel que précédemment décrit, dans lequel l'action à réponse progressive est un réglage d'un volume de restitution sonore de l'équipement de restitution audio.

On propose aussi un équipement de restitution audio tel que précédemment décrit, comprenant un émetteur sensoriel agencé pour fournir à l'utilisateur un retour sensoriel représentatif du glissement de commande et/ou d'un niveau de réponse de l'action prédéterminée.

On propose aussi un équipement de restitution audio tel que précédemment décrit, dans lequel l'émetteur sensoriel est agencé pour émettre un signal sensoriel de retour lorsque le niveau de réponse de l'action prédéterminée franchit un palier prédéfini ou atteint une butée maximale ou minimale.

On propose aussi un équipement de restitution audio tel que précédemment décrit, dans lequel l'émetteur sensoriel est agencé pour émettre un signal sensoriel de retour qui dépend d'un parcours sur le boîtier d'un doigt de l'utilisateur lors du glissement de commande.

On propose aussi un équipement de restitution audio tel que précédemment décrit, l'émetteur sensoriel étant un émetteur lumineux.

On propose aussi un équipement de restitution audio tel que précédemment décrit, l'émetteur sensoriel étant un émetteur sonore.

On propose aussi un équipement de restitution audio tel que précédemment décrit, l'équipement de restitution audio étant une enceinte connectée.

On propose de plus un procédé de commande d'un équipement de restitution audio tel que précédemment décrit, comprenant les étapes de :

- émettre via le haut-parleur le signal sonore de détection ;
- acquérir les signaux audio de détection produits par les microphones ;
- détecter à partir des signaux audio de détection la succession d'occultations d'au moins deux microphones distincts ;
- analyser la succession d'occultations de manière à détecter le glissement de commande réalisé sur le boîtier par l'utilisateur entre les au moins deux microphones distincts ;
- commander l'action prédéterminée suite à la détection du glissement de commande.

On propose aussi un programme d'ordinateur comprenant des instructions qui conduisent le composant de traitement de l'équipement de restitution audio tel que précédemment décrit à exécuter les étapes du procédé de commande tel que précédemment décrit.

On propose en outre un support d'enregistrement lisible par ordinateur, sur lequel est enregistré le programme d'ordinateur qui vient d'être décrit.

L'invention sera mieux comprise à la lumière de la description qui suit de modes de mise en oeuvre particuliers non limitatifs de l'invention.

BREVE DESCRIPTION DES DESSINS

Il sera fait référence aux dessins annexés parmi lesquels :

[Fig. 1] la figure 1 représente une enceinte connectée selon l'invention ;
[Fig. 2] la figure 2 représente un graphique comprenant une courbe du seuil d'audition minimal ;
[Fig. 3] la figure 3 représente des étapes d'un procédé de traitement d'un signal audio de détection produit par un microphone ;
[Fig. 4] la figure 4 représente des étapes d'un procédé de détection d'un glissement de commande ;
[Fig. 5] la figure 5 représente une face supérieure du boîtier d'une enceinte connectée comprenant deux microphones, et le doigt d'un utilisateur qui effectue un glissement de commande ;
[Fig. 6] la figure 6 représente une face supérieure du boîtier d'une enceinte connectée comprenant trois microphones alignés ;
[Fig. 7] la figure 7 représente une face supérieure du boîtier d'une enceinte connectée comprenant six microphones disposés de manière circulaire, dont deux positionnés sur un axe central ;
[Fig. 8] la figure 8 est une figure similaire à la figure 7, mais sans microphone sur l'axe central ;
[Fig. 9] la figure 9 représente une face supérieure du boîtier d'une enceinte connectée comprenant six microphones disposés de manière circulaire, ainsi qu'une couronne de segments lumineux.

DESCRIPTION DETAILLEE DE L'INVENTION

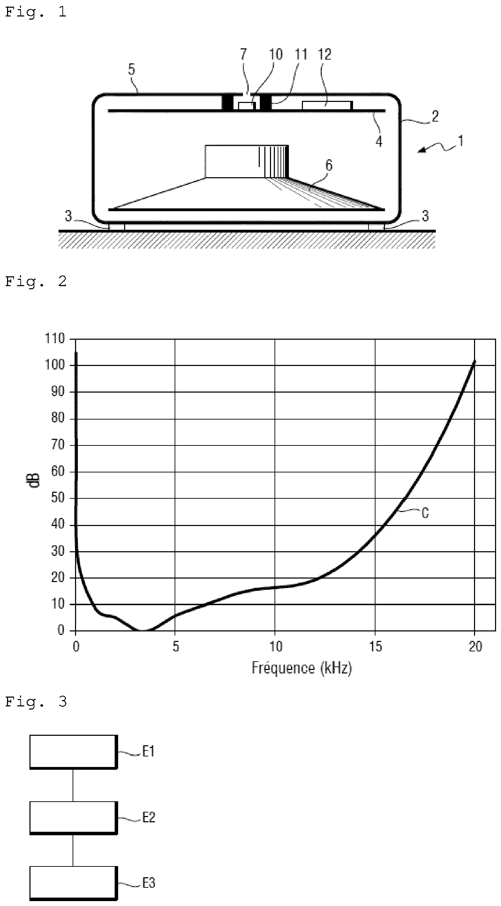

En référence à la figure 1, l'équipement de restitution audio selon l'invention est ici une enceinte connectée 1 qui est utilisée pour mettre en œuvre le procédé de reconnaissance vocale d'un assistant personnel virtuel.

L'enceinte connectée 1 comprend tout d'abord un boîtier 2. Par « boîtier », on entend ici l'enveloppe physique à l'intérieur de laquelle sont intégrés les composants fonctionnels de l'enceinte connectée 1 qui vont être décrits. Le boîtier 2 peut comporter plusieurs parties et éventuellement un ou des capots possiblement amovibles. Le boîtier 2 peut comprendre une ou des parties rigides, flexibles, en métal, en plastique, en tissu, en mousse, etc.

Le boîtier 2 comporte de plus des pieds 3 qui reposent sur un support quelconque (par exemple une table ou un meuble quelconque) lorsque l'enceinte connectée 1 se trouve dans sa position de fonctionnement nominal, comme c'est le cas sur la figure 1.

L'enceinte connectée 1 comporte aussi un châssis interne (non représenté sur les figures) intégré à l'intérieur du boîtier 2.

L'enceinte connectée 1 comporte de plus une carte électrique 4. La carte électrique 4 est intégrée dans le boîtier 2 en étant fixée au châssis interne. La carte électrique 4 est positionnée parallèlement à la face supérieure 5 du boîtier 2 et à proximité de celle-ci. La distance entre la carte électrique 4 et la face supérieure 5 du boîtier 2 est par exemple comprise entre 5mm et 1,5cm.

L'enceinte connectée 1 comprend de plus un haut-parleur 6 intégré dans le boîtier 2 en étant fixé au châssis interne. Ici, le haut-parleur 6 « pointe vers le bas », c'est-à-dire qu'il présente un diagramme de directivité qui, lorsque l'enceinte connectée 1 se trouve dans sa position de fonctionnement nominal, est orienté vers le bas.

Une pluralité de trous 7 (ou perçages) sont formés sur la face supérieure 5 du boîtier 2 (un seul trou est représenté sur la figure 1). Chaque trou 7 traverse le boîtier 2.

On note que les trous 7 pourraient aussi être formés sur des faces latérales du boîtier 2, c'est-à-dire sur les côtés du boîtier 2, et sur des parties quelconques du boîtier 2 (par exemple sur un capot amovible).

L'enceinte connectée 1 comprend de plus une pluralité de microphones 10 (un seul microphone 10 est représenté sur la figure 1) qui sont ici des composants montés en surface (CMS). Les microphones 10 sont montés sur le circuit imprimé de la carte électrique 4. Chaque microphone 10 est positionné à l'intérieur du boîtier 2 et se trouve à proximité d'un trou 7 (distinct), de sorte que la partie sensible dudit microphone 10 est en communication acoustique avec l'extérieur via ledit trou 7. Ici, chaque microphone 10 est positionné en regard d'un trou 7 de sorte que l'axe du trou 7 passe par le centre du microphone 10.

On note que le diagramme de directivité du haut-parleur 6 est orienté vers une zone ne comprenant pas de microphone 10 : les microphones 10 sont en effet positionnés ici dans une partie supérieure de l'enceinte connectée 1.

Un matériau isolant phonique est placé autour de chaque microphone 10 entre la carte électrique 4 et le boîtier 2. Le matériau isolant phonique est ici une mousse 11. La mousse 11 permet de limiter les perturbations sonores perçues par le microphone 10 et provenant de l'intérieur de l'enceinte connectée 1. Ces perturbations sonores comprennent par exemple les signaux sonores émis par le haut-parleur 6 et les résonnances parasites à l'intérieur de l'enceinte connectée 1.

Les microphones 10 sont isolés acoustiquement les uns des autres.

De même, la carte électrique 4 est fixée au châssis interne de l'enceinte connectée 1 via une pièce de fixation (non représentée) comprenant un matériau souple. La pièce de fixation est par exemple un « silentbloc », qui est une pièce comprenant par exemple du caoutchouc naturel ou un élastomère, et qui permet d'absorber les vibrations et les bruits.

La pièce de fixation permet de limiter la transmission directe de vibrations depuis le haut-parleur 6 vers les microphones 10 au travers du châssis interne.

L'enceinte connectée 1 comprend de plus des moyens d'émission et des moyens de traitement.

Les moyens d'émission comprennent des composants électroniques comportant par exemple un amplificateur.

Les moyens de traitement comprennent au moins un composant de traitement 12 adapté à exécuter des instructions de programmes pour mettre en oeuvre les différentes étapes du procédé de traitement, du procédé de détection et du procédé de commande qui vont être décrits ci-après. Le composant de traitement 12 est relié à au moins une mémoire dans laquelle sont stockés les programmes. Le composant de traitement 12 est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Spécifie Integrated Circuit*). Ici, le composant de traitement 12 est monté sur la carte électrique 4.

L'enceinte connectée 1 comporte une pluralité de boutons virtuels, situés sur la face supérieure 5 du boîtier 2 : chaque bouton virtuel comporte un microphone 10 et le trou 7 associé.

Les boutons virtuels permettent à l'utilisateur de l'enceinte connectée 1 de commander des actions prédéterminées en effectuant des gestes de commande.

Un geste de commande peut être un appui de commande ou un glissement de commande (ou une succession d'appuis de commande et de glissements de commande).

Un appui de commande consiste, pour l'utilisateur, à occulter un microphone 10 en positionnant l'un de ses doigts sur ou à proximité immédiate du trou 7 associé au microphone 10.

Par « sur ou à proximité immédiate », on entend que le doigt est posé sur le trou 7 et le recouvre entièrement ou partiellement, ou bien que le doigt est approché au-dessus du trou 7 à une faible distance de celui-ci, comprise par exemple entre 0 et 10mm.

Un glissement de commande consiste, pour l'utilisateur, à faire glisser son doigt sur le boîtier 2 entre plusieurs microphones 10 distincts. Un glissement de commande produit donc une succession d'occultations d'au moins deux microphones 10 distincts.

On décrit tout d'abord le fonctionnement d'un bouton virtuel, et la détection d'un appui de commande sur ledit bouton virtuel.

Les moyens d'émission émettent en permanence (c'est-à-dire tant que l'enceinte connectée 1 est activée) un signal sonore de détection via le haut-parleur 6. Le microphone 10 du bouton virtuel capture le signal sonore de détection et produit à partir de la capture du signal sonore de détection un signal audio de détection.

Le composant de traitement 12 acquiert le signal audio de détection et détecte en temps réel, à partir du signal audio de détection, si le microphone 10 est occulté ou non.

En effet, lorsqu'un doigt (ou un objet quelconque) est positionné sur le trou 7 ou à proximité immédiate de celui-ci, le signal sonore de détection capturé par le microphone 10 est fortement atténué, c'est-à-dire que l'énergie ou la puissance instantanée du signal sonore de détection capturé a diminué fortement. La détection de cette atténuation par le composant de traitement 12 permet de détecter la présence du doigt de l'utilisateur.

L'utilisation de la mousse 11 et du silentbloc, et le fait que le diagramme de directivité du haut-parleur 6 soit orienté vers une zone ne contenant pas le microphone 10, permettent d'assurer que le microphone 10 ne capte pas le signal sonore de détection suite à une propagation de celui-ci via l'intérieur du boîtier 2, mais uniquement suite à une propagation de celui-ci par l'extérieur du boîtier 2. Le niveau et la variation de l'énergie du signal sonore de détection capturé (et donc du signal audio de détection) dépendent uniquement de la position ou non d'un objet sur ou à proximité immédiate du trou 7.

Le signal sonore de détection est un signal sonore prédéterminé, par exemple un signal sinusoïdal de fréquence et d'amplitude constantes.

Le signal sonore de détection est un signal normalement inaudible par un être humain. La fréquence du signal sonore de détection est comprise dans la plage de fonctionnement du haut-parleur 6 et du microphone 10.

La fréquence du signal sonore de détection est par exemple égale à 22kHz. En effet, la gamme de fréquences de l'audition humaine s'étend typiquement entre 20Hz et 20kHz de sorte qu'une fréquence de 22kHz est inaudible. En outre, les appareils de traitement audio grand public (comme l'enceinte connectée 1) ont typiquement une fréquence d'échantillonnage de 48kHz et peuvent donc traiter les signaux de fréquences inférieures à 24kHz.

Dans le cas où l'enceinte connectée 1 n'est pas capable de reproduire (via le haut-parleur 6) ou de capter (via le microphone 10) des fréquences situées au-dessus de 20kHz, le signal peut également être situé dans la plage de fréquences audibles pour un humain, mais à un niveau trop faible pour être entendu.

La courbe du seuil d'audition minimal (ATH, pour *Absolute Threshold of Hearing*) d'un humain (âgé de 20 ans, avec une audition non dégradée) peut être modélisée par l'équation suivante, utilisée par exemple par plusieurs encodeurs audionumériques :

$$\texttt{ATH = 3,64 * f\^{}(-0,8) - 6,8 * e(-0,6*(f-3,4)\^{}2) + 6 * e(-0,15*(f-8,7)\^{}2) + 0,6* 0,001 * f\^{}4,}$$

où f est la fréquence (en kHz), et ATH le seuil d'audition minimal, en dB.

L'équation suivante est équivalente :

$$\texttt{ATH = 3.640 * pow(f,-0.8)- 6.800 * exp(-0.6*pow(f-3.4,2.0)) + 6.000 * exp(-0.15*pow(f-8.7,2.0)) + 0.6* 0.001 * pow(f,4.0).}$$

La courbe C du seuil d'audition minimal est visible sur la figure 2.

On constate que la sensibilité de l'oreille humaine décroît fortement dans les hautes fréquences. Par exemple, un signal d'une fréquence de 17kHz demandera une puissance d'environ 55dB au-dessus du niveau minimal pour atteindre le seuil d'audition. Un signal sonore de détection ayant une fréquence égale à 17kHz et un niveau égal à 20dB peut donc parfaitement être utilisé : un tel signal sonore de détection peut en effet être capturé par le microphone 10 tout en étant bien en dessous de la courbe du seuil d'audition minimal.

Avantageusement, le signal sonore de détection est modulé afin d'être facilement distingué du bruit de fond. Par exemple, le signal sonore de détection comprend une succession de signaux d'amplitude non nulle et de signaux d'amplitude nulle. Les durées des intervalles comprenant les signaux d'amplitude non nulle et des intervalles comprenant les signaux d'amplitude nulle peuvent être variables.

Le signal sonore de détection est par exemple composé de la séquence suivante, répétée « indéfiniment » :

- sinusoïde à 22 kHz pendant 5ms (appartenant donc aux signaux d'amplitude non nulle) ;
- silence pendant 5ms (appartenant donc aux silences) ;
- sinusoïde à 22 kHz pendant 5ms (appartenant donc aux signaux d'amplitude non nulle) ;
- silence pendant 10ms (appartenant donc aux silences).

Le microphone 10 échantillonne le signal sonore de détection qu'il capture et produit le signal audio de détection. Le composant de traitement 12 acquiert en permanence le signal audio de détection.

Dans tous les cas, le signal est identifié selon son empreinte fréquentielle (qui est modulée ou non).

En référence à la figure 3, le composant de traitement 12 met alors en oeuvre un procédé de traitement sur le signal audio de détection afin de détecter si l'utilisateur a placé ou non son doigt sur ou à proximité immédiate du trou

6

7, et donc si le microphone 10 est occulté ou non.

Tout d'abord, le composant de traitement 12 applique un filtre passe-bande, relativement étroit et sélectif, autour de la fréquence du signal sonore de détection (étape E1).

Par exemple, dans le cas où le signal sonore de détection a une fréquence de 22kHz, le microphone 10 échantillonne le signal sonore de détection capturé à une fréquence de 48kHz pour produire un signal audio de détection échantillonné. Le composant de traitement 12 applique par exemple le filtre suivant sur le signal échantillonné pour obtenir un signal filtré :

$$y(t) = 0,00995 \times \big(x(t) - x(t-2)\big) - 1,9125 \times y(t-1) - 0,9801 \times y(t-2)$$

où *x(t)* représente le signal échantillonné à l'instant *t* et *y(t)* représente le signal filtré à l'instant *t*.

Puis, le composant de traitement 12 calcule la puissance instantanée du signal audio de détection en calculant la moyenne de $y(t)^2$ sur un temps court (par exemple 1ms) - étape E2.

Le composant de traitement 12 évalue ainsi au temps *t* une puissance instantanée présente *P(t)* du signal audio de détection produit par le microphone 10.

Le composant de traitement 12 compare alors la puissance instantanée présente *P(t)* avec une puissance instantanée passée *P(t-T0)*. *T0* est compris entre 1ms et 500ms. Ici, *T0* est égal à 25ms.

Si le rapport entre la puissance instantanée présente et la puissance instantanée passée est inférieur à un seuil de puissance prédéterminé, le composant de traitement 12 en déduit que l'accès au trou 7 vient d'être au moins partiellement obturé, et donc que le doigt est positionné sur ou à proximité immédiate du trou 7 et que le microphone 10 est occulté (étape E3).

Le seuil de puissance prédéterminé est ici égal à 25%, c'est-à-dire que si la puissance instantanée présente est inférieure à 25% de la puissance instantanée passée, alors le composant de traitement 12 considère que le doigt est positionné sur ou à proximité immédiate du trou 7.

Le composant de traitement 12 détecte ici un appui de commande lorsque le microphone 10 a été occulté puis que le microphone 10 a été libéré. Cela n'est pas obligatoire : le composant de traitement 12 pourrait détecter un appui de commande dès la détection de l'occultation du microphone 10.

Lorsque le composant de traitement 12 a détecté un appui de commande, le composant de traitement 12 commande la mise en oeuvre de l'action prédéterminée associée au bouton virtuel sur lequel l'appui de commande a été effectué.

L'action prédéterminée peut consister à démarrer une interaction vocale avec l'utilisateur : dès que le composant de traitement 12 détecte que l'utilisateur a réalisé un appui de commande, il déclenche un processus de reconnaissance vocale et de dialogue avec l'utilisateur. L'action prédéterminée peut aussi consister à désactiver l'interaction vocale.

L'action prédéterminée peut aussi consister à activer ou à désactiver un mode de veille. Dans ce cas, en fonctionnement normal, l'enceinte connectée 1 écoute en permanence afin de détecter un mot-clef pour démarrer une interaction avec l'utilisateur. Les fonctions de l'enceinte connectée 1 permettant de mettre en oeuvre le bouton virtuel sont elles aussi activées. Par contre, en fonctionnement dans le mode de veille, toutes les fonctions de l'enceinte connectée 1 sont désactivées sauf celles permettant de mettre en oeuvre le bouton virtuel. Ainsi, chaque fois que le composant de traitement 12 détecte que l'utilisateur a posé le doigt sur ou à proximité immédiate du trou 7, le composant de traitement 12 fait basculer alternativement l'enceinte connectée 1 entre le fonctionnement normal et le fonctionnement en veille.

L'action prédéterminée peut aussi être le démarrage de la lecture d'un contenu (musical par exemple), ou bien la mise en pause de la lecture.

On note qu'il est possible d'utiliser, comme signal sonore de détection, le signal sonore émis par le haut-parleur 6 lorsque l'enceinte connectée 1 diffuse en utilisation nominale un signal sonore audible, par exemple de la musique.

Le composant de traitement 12 évalue alors, sur une bande de fréquence donnée, le rapport entre la puissance émise par le haut-parleur 6 et la puissance captée par le microphone 10. Un changement de ce rapport permet de conclure à une occultation du microphone 10. Cette méthode est cependant plus complexe à mettre en oeuvre, car elle nécessite que le haut-parleur 6 soit en train de jouer des sons audibles par l'utilisateur et, même dans ce cas, il peut arriver que la musique restituée présente des absences temporaires de signal sur une bande de fréquence donnée. Avantageusement, pour pallier ce problème, le rapport entre la puissance émise et la puissance captée sera calculé par le composant de traitement 12 sur une large bande de fréquence.

Comme on l'a vu plus tôt, l'enceinte connectée 1 peut être commandée par un appui de commande sur un bouton virtuel, mais aussi par un glissement de commande sur le boîtier 2.

L'action prédéterminée associée à un glissement de commande peut bien sûr être différente de celle associée à un appui de commande.

Il convient donc de distinguer un glissement de commande d'un appui de commande.

Bien sûr, il est possible que l'utilisateur réalise une pluralité d'appuis de commande successifs sur des boutons virtuels différents, et il convient donc aussi de distinguer un glissement de commande d'une succession d'appuis de commande.

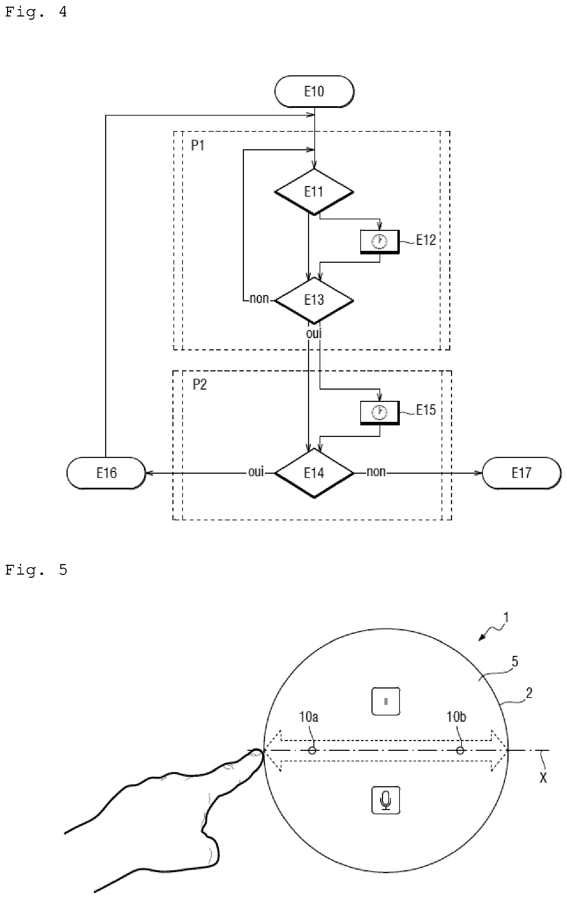

On met donc en oeuvre, en référence à la figure 4, un procédé de détection d'un glissement de commande.

Le procédé de détection démarre à l'étape E10 et débute par une première phase de détection P1.

Le composant de traitement 12 tente de détecter une première occultation d'un premier microphone (étape E11). Tant que la première occultation n'est pas détectée, le procédé de détection reste à l'étape E11.

Lorsque le composant de traitement 12 a détecté la première occultation du premier microphone, le composant de traitement 12 démarre un premier timer (ou « chronomètre ») qui expire après une première durée prédéfinie (étape E12).

La première durée prédéfinie correspond à la durée maximale de la première occultation du premier microphone qui peut correspondre à un glissement de commande volontaire. La première durée prédéfinie est par exemple égale à 1s ou 0,5s.

Le composant de traitement 12 détecte alors la fin de la première occultation, c'est-à-dire un relâchement de l'appui, et vérifie si la fin de la première occultation a eu lieu avant l'expiration du premier timer, c'est-à-dire si une première durée de la première occultation est inférieure à la première durée prédéfinie (étape E13).

Si ce n'est pas le cas, le procédé de détection repasse à l'étape E11.

Si le relâchement se produit avant l'expiration du premier timer, alors un geste de commande est bien détecté. Il n'est cependant pas encore possible de déterminer s'il s'agit d'un appui de commande ou d'un glissement de commande. Le procédé de détection comprend donc une seconde phase de détection P2 qui permet de catégoriser le geste de commande en un appui de commande ou en un glissement de commande.

Ainsi, suite à l'étape E13, le composant de traitement 12 tente de détecter une deuxième occultation d'un deuxième microphone distinct du premier microphone (étape E14). Simultanément, à la fin de la première occultation, le composant de traitement 12 démarre un deuxième timer qui expire après une deuxième durée prédéfinie (étape E15). La deuxième durée prédéfinie correspond à la durée maximale souhaitée pour que le doigt passe d'un microphone à un autre au cours du glissement. La deuxième durée prédéfinie est par exemple égale à 0,5s ou à 0,25s.

Avantageusement, on prévoit que la deuxième durée prédéfinie dépend de la distance entre les microphones 10 sur le boîtier 2 de l'enceinte connectée 1 : la deuxième durée prédéfinie est plus importante lorsque les microphones 10 sont plus espacés, et plus faible lorsque les microphones 10 sont moins espacés.

Si la deuxième occultation du deuxième microphone se produit après l'expiration de la deuxième durée prédéfinie (ou bien ne se produit pas), alors le composant de traitement 12 détecte que la première occultation et la deuxième occultation (ou bien la première occultation seulement) constituent deux appuis de commande distincts (ou un appui de commande seulement) - étape E16.

Par contre, si la deuxième occultation du deuxième microphone se produit avant l'expiration de la deuxième durée prédéfinie, c'est-à-dire si une deuxième durée entre la fin de la première occultation et le début de la deuxième occultation est inférieure à la deuxième durée prédéfinie, alors le composant de traitement 12 détecte un glissement de commande réalisé sur le boîtier 2 par l'utilisateur entre le premier microphone et le deuxième microphone (étape E17).

Le composant de traitement 12 poursuit éventuellement la détection si l'enceinte connectée 1 intègre plus de deux microphones 10. Dans ce cas, la détection de l'étape E11 sera directement validée, car la deuxième occultation du deuxième microphone a déjà été détectée à l'étape E14.

Si le composant de traitement 12 a détecté un ou des appuis de commande sur des boutons virtuels, alors le composant de traitement 12 met en oeuvre des actions prédéterminées correspondant audit ou auxdits boutons virtuels (comme ci-dessus).

Si le composant de traitement 12 a détecté un glissement de commande, le composant de traitement 12 compare le glissement de commande avec au moins un glissement prédéfini d'une liste prédéfinie (stockée par exemple dans la mémoire reliée au composant de traitement 12), détermine un glissement prédéfini particulier auquel correspond le glissement de commande, et pilote l'enceinte connectée 1 pour que celle-ci réalise au moins une action prédéterminée associée au glissement prédéfini particulier.

Ici, chaque glissement prédéfini de la liste prédéfinie correspond à une succession d'occultations prédéfinie de microphones 10 disposés successivement. Ainsi, dans chaque glissement prédéfini, l'occultation d'un premier microphone est suivie par l'occultation d'un deuxième microphone adjacent au premier microphone.

Les glissements entre des microphones 10 qui ne sont pas disposés successivement ne sont donc pas admis, c'est-à-dire qu'ils ne correspondent pas à des glissements prédéfinis de la liste prédéfinie.

Lorsque les microphones 10 sont alignés, les glissements prédéfinis sont des glissements linéaires.

En référence à la figure 5, une enceinte connectée 1 selon un premier mode de réalisation comporte deux microphones 10a, 10b (et donc deux trous) formant deux boutons virtuels sur la face supérieure 5 du boîtier 2.

Sur les figures 5 à 9, on assimile chaque microphone 10 au trou 7 associé - mais bien sûr, en réalité, seul le trou 7 est apparent sur le boîtier 2, le microphone 10 étant positionné à l'intérieur du boîtier 2.

Pour détecter un glissement du doigt de l'utilisateur selon l'axe X, le composant de traitement 12 va détecter des occultations successives des microphones 10a puis 10b (glissement vers la droite), ou des microphones 10b puis 10a (glissement vers la gauche), le tout dans un intervalle de temps réduit (par exemple inférieur à 1 seconde).

La liste prédéfinie de glissements prédéfinis comprend ici un glissement dans un premier sens, de la gauche vers la droite, c'est-à-dire la succession d'occultations suivante :

10a ; 10b,

et un glissement dans un deuxième sens, de la droite vers la gauche, c'est-à-dire la succession d'occultations suivante :

10b ; 10a.

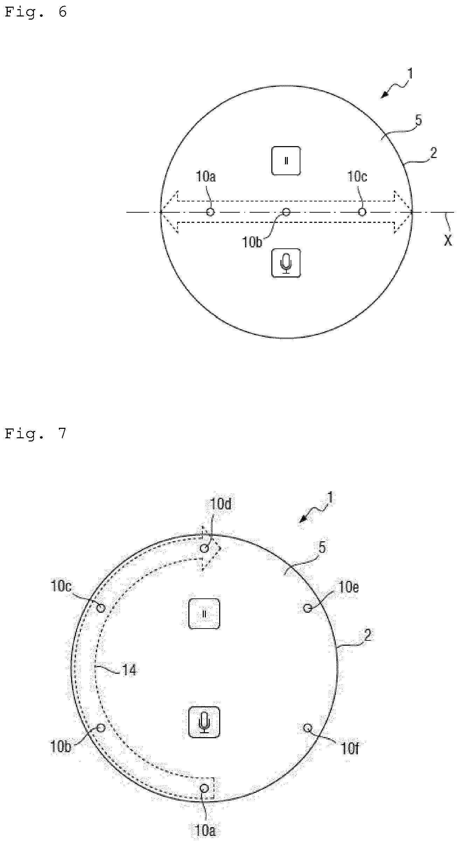

En référence à la figure 6, une enceinte connectée 1 selon un deuxième mode de réalisation comporte trois microphones 10a, 10b, 10c alignés selon l'axe X.

La liste prédéfinie de glissements prédéfinis comprend des glissements dans un premier sens, de la gauche vers la droite, formés par les successions d'occultations suivantes :

10a ; 10b,
10a ; 10b ; 10c,
10b ; 10c,

et des glissements dans un deuxième sens, de la droite vers la gauche, formés par les successions d'occultations suivantes :

10c ; 10b,
10c ; 10b ; 10a,
10b ; 10a.

L'action prédéterminée commandée par le glissement de commande peut être une action à réponse progressive, et notamment une action à réponse graduelle. Par « action à réponse progressive », on entend une action dont le niveau de réponse varie en fonction du glissement de commande (longueur, durée d'occultations de certains microphones, durée du glissement, etc.) et/ou du nombre de glissements de commande.

Un glissement prédéfini dans le premier sens peut être associé à une augmentation d'un niveau de réponse de l'action à réponse progressive, alors qu'un glissement prédéfini dans le deuxième sens peut être associé à une réduction du niveau de réponse de l'action à réponse progressive.

L'action à réponse progressive est par exemple le réglage du volume de restitution sonore de l'enceinte connectée 1.

Ainsi, un glissement de commande de la gauche vers la droite commande ici une augmentation du volume, alors qu'un glissement de commande de la droite vers la gauche commande ici une réduction du volume.

La liste de glissements prédéfinis peut comprendre plusieurs glissements prédéfinis dans un même sens mais de longueurs différentes. La longueur d'un glissement prédéfini est égale au nombre de microphones 10 occultés dans la succession d'occultations formant le glissement prédéfini.

Si l'action prédéterminée associée à un glissement prédéfini est une action à réponse progressive, le niveau de réponse de l'action à réponse progressive peut dépendre de la longueur dudit glissement prédéfini.

Par exemple, dans la configuration de la figure 6, on peut prévoir qu'un glissement de commande qui débuterait par une occultation du microphone 10a et s'achèverait par une occultation du microphone 10b commanderait une faible augmentation du volume, alors qu'un glissement de commande qui débuterait par une occultation du microphone 10a et s'achèverait par une occultation du microphone 10c commanderait une forte augmentation du volume.

Dans le cas d'une action à réponse progressive, il pourrait être pertinent de ne pas nécessairement proposer une réponse permettant de passer de 0% à 100%, mais de proposer à la place un ajustement partiel. Par exemple, on pourra définir qu'un glissement de commande augmente ou diminue le volume de 20% maximum.

On peut prévoir qu'une variation du niveau de réponse de l'action à réponse progressive est plus importante si le glissement prédéfini est suivi d'une occultation maintenue d'un microphone à la fin du glissement prédéfini. La variation du niveau de réponse peut aussi dépendre de la durée de l'occultation maintenue.

Ainsi, l'augmentation ou la réduction du volume pourrait être de 10% - voire même de 0% - dans le cas d'un simple glissement de commande, mais être égale à 20% par seconde pendant la durée d'une occultation maintenue à la fin du glissement de commande.

Bien sûr, l'augmentation du nombre de microphones 10 sur l'axe X permet d'avoir des « graduations » d'amplitude plus réduite et donc une réponse de l'action à réponse progressive plus fine et plus précise.

On note qu'il est très avantageux de positionner les microphones 10 sur la périphérie du boîtier 2 de l'enceinte connectée 1, afin de pouvoir effectuer lors de la capture des signaux sonores des traitements de type procédé de formation de voies dans plusieurs directions.

Les glissements de commande (et donc les glissements prédéfinis) sont alors des glissements circulaires.

Pour pouvoir détecter le sens du mouvement, il faut que l'enceinte connectée 1 comprenne au moins trois microphones 10 positionnés en périphérie. Si l'enceinte connectée 1 comprend trois microphones 10, ceux-ci sont disposés en triangle.

Un faible nombre de microphones 10 entraîne une granularité grossière dans la réponse aux gestes de l'utilisateur, et il est donc préférable, pour détecter des glissements circulaires, de munir l'enceinte connectée 1 d'un plus grand nombre de microphones 10 situés en périphérie, par exemple de six ou huit microphones 10.

L'enceinte connectée 1 pourra potentiellement comprendre à la fois des microphones 10 positionnés en périphérie, et un microphone central. Il est alors possible de détecter à la fois des glissements linéaires selon un axe, et des glissements circulaires sur la périphérie.

En référence à la figure 7, une enceinte connectée 1 selon un troisième mode de réalisation comporte six microphones 10a, 10b, 10c, 10d, 10e, 10f disposés de manière circulaire et formant une couronne de microphones en périphérie de la face supérieure 5 du boîtier 2 de l'enceinte connectée 1. Les glissements prédéfinis sont donc des glissements circulaires.

L'action prédéterminée particulière est à nouveau le réglage du volume de restitution sonore : un glissement dans le sens horaire commande une augmentation du volume, alors qu'un glissement dans le sens anti-horaire commande une réduction du volume.

Avec une telle configuration de microphones 10, il est possible de détecter des glissements de commande dans un premier sens, c'est-à-dire selon une rotation dans le sens horaire (tel que le glissement de commande 14), ou des glissements de commande dans un deuxième sens, c'est-à-dire selon une rotation dans le sens anti-horaire.

On peut prévoir qu'au moins un glissement prédéfini associé à une action prédéterminée particulière est défini de manière à débuter nécessairement par une occultation d'un microphone initial prédéfini et/ou de manière à s'achever nécessairement par une occultation d'un microphone final prédéfini.

Le microphone initial prédéfini est par exemple le microphone 10a et le microphone final prédéfini le microphone 10d pour le glissement de commande 14 selon le sens horaire dans la partie gauche de la couronne de microphones (augmentation du volume). Le microphone initial prédéfini est par exemple le microphone 10d et le microphone final prédéfini le microphone 10a pour le glissement de commande selon le sens horaire dans la partie droite de la couronne de microphones (augmentation du volume).

Inversement, le microphone initial prédéfini est par exemple le microphone 10d et le microphone final prédéfini le microphone 10a pour le glissement de commande selon le sens anti-horaire dans la partie gauche de la couronne de microphones (réduction du volume). Le microphone initial prédéfini est par exemple le microphone 10a et le microphone final prédéfini le microphone 10d pour le glissement de commande selon le sens anti-horaire dans la partie droite de la couronne de microphones (réduction du volume).

Les autres glissements de commande (par exemple du microphone 10c vers le microphone 10e) ne sont alors pas admissibles (tout au moins pour régler le volume).

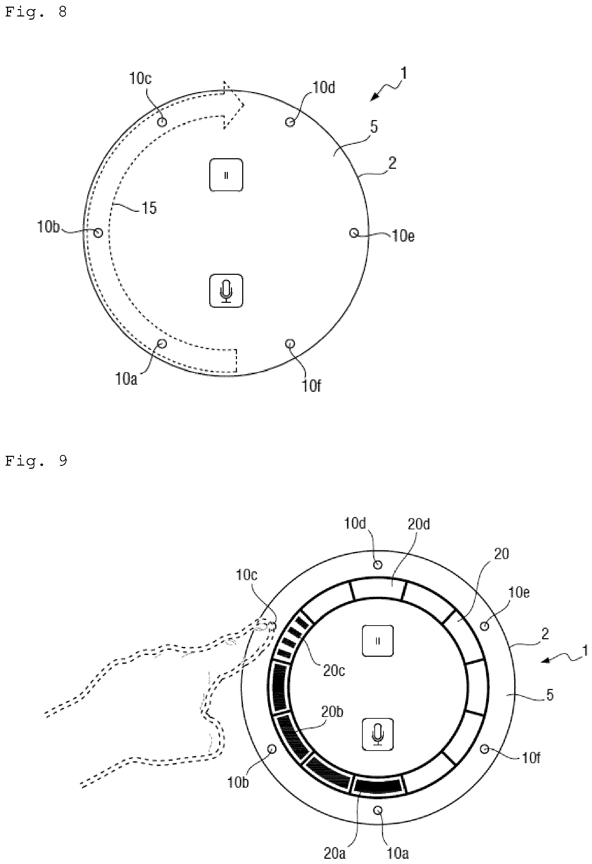

En référence à la figure 8, une enceinte connectée 1 selon un quatrième mode de réalisation comporte à nouveau six microphones 10a, 10b, 10c, 10d, 10e, 10f disposés de manière circulaire. Cette fois, il n'y a pas de microphone dans l'axe central Y.

Le microphone initial prédéfini est par exemple le microphone 10a et le microphone final prédéfini le microphone 10c pour le glissement de commande 15 selon le sens horaire dans la partie gauche de la couronne de microphones. Le microphone initial prédéfini est par exemple le microphone 10d et le microphone final prédéfini le microphone 10f pour le glissement de commande selon le sens horaire dans la partie droite de la couronne de microphones.

La configuration de la figure 7 permet d'obtenir un nombre de pas de commande (quatre pas) plus important que la configuration de la figure 8 (trois pas) pour un demi-tour, et d'effectuer un réglage plus fin dans le cas où l'action prédéterminée associée au glissement de commande est une action à réponse progressive (comme pour le réglage du volume).

Le point de départ et le point d'arrivée des glissements de commande peuvent aussi être indifférents, l'important étant alors uniquement l'arc de la rotation effectuée par l'utilisateur.

La longueur maximale des glissements de commande peut être limitée, par exemple à un demi-tour.

Dans ce cas, en référence à nouveau à la figure 7, les glissements prédéfinis comprennent toutes les successions d'occultations appartenant aux listes suivantes :

- dans le premier sens (horaire), pour la partie gauche de la couronne :
  [10a ; 10b ; 10c ; 10d] ;
- dans le premier sens (horaire), pour la partie droite de la couronne :
  [10d ; 10e ; 10f ; 10a] ;

- dans le deuxième sens (anti-horaire), pour la partie gauche de la couronne :
[10d ; 10c ; 10b ; 10a] ;
- dans le deuxième sens (anti-horaire), pour la partie droite de la couronne :
[10a ; 10f ; 10e ; 10d].

La longueur des glissements de commande peut ne pas être limitée aux demi-tours, et dans ce cas, les glissements prédéfinis comprennent toutes les successions d'occultations appartenant aux listes suivantes :

- dans le premier sens (horaire) :
[10a ; 10b ; 10c ; 10d ; 10e ; 10f] ;
- dans le deuxième sens (anti-horaire) :
[10f ; 10e ; 10d ; 10c ; 10b ; 10a].

Afin de permettre de démarrer le glissement de commande circulaire depuis n'importe quel endroit de la couronne de microphones, on considérera ces deux dernières listes comme des listes circulaires. Pour permettre la prise en compte de glissements de plus d'un tour, on acceptera également que ces deux dernières listes soient répétées (autant de fois que l'on accepte de tours lors d'un glissement de commande).

Comme les boutons virtuels ne sont pas visuels et ne sont pas des boutons poussoirs, l'utilisateur se trouve privé de la perception visuelle ou tactile de l'appui ou du glissement sur les boutons. Pour compenser cette absence, l'enceinte connectée 1 comprend un émetteur sensoriel agencé pour fournir à l'utilisateur un retour sensoriel, représentatif du glissement de commande et/ou d'un niveau de réponse de l'action prédéterminée qui est commandée suite à la détection du glissement de commande.

L'émetteur sensoriel est par exemple un émetteur sonore, qui comprend ici le haut-parleur 6 et les moyens d'émission de l'enceinte connecté 1. Le retour sensoriel est donc un retour sonore.

L'émetteur sonore peut par exemple émettre un signal sonore de retour lorsque le niveau de réponse de l'action prédéterminée franchit (en augmentant ou en diminuant) un palier prédéfini.

L'émetteur sonore émet ici un premier signal sonore de retour, par exemple un « tick », à chaque fois que le volume sonore franchit un palier de 20%.

L'émetteur sonore peut aussi émettre un signal sonore de retour lorsque le niveau de réponse de l'action prédéterminée atteint une butée maximale (ou minimale) associée au sens du glissement de commande, c'est-à-dire que le niveau de réponse atteint une valeur maximale (ou minimale) et n'augmente (ou ne diminue) plus, même si l'utilisateur effectue d'autres glissements de commande dans le même sens.

L'émetteur sonore produit ici un deuxième signal sonore de retour, différent du premier signal sonore de retour, lorsque la butée maximale (volume maximal) est atteinte et un troisième signal sonore de retour, différent des premier et deuxième signaux sonores de retour, lorsque la butée minimale (volume minimal) est atteinte.

L'intensité du ou des signaux sonores de retour pourra être constante (par exemple dans le cas de défilement de stations de radio), ou modulée en intensité (par exemple dans le cas du réglage du volume de restitution sonore).

L'émetteur sensoriel peut aussi être un émetteur lumineux qui comporte des indicateurs lumineux. Les indicateurs lumineux comprennent par exemple des diodes électroluminescentes (LEDs). L'émetteur lumineux comporte aussi des composants pour piloter les indicateurs lumineux (driver).

Le retour visuel pourra consister en l'allumage d'un ou de plusieurs indicateurs lumineux, dont l'intensité et/ou la couleur peuvent être variables. L'enceinte connectée 1 commande ces indicateurs lumineux en fonction du glissement de commande et/ou du niveau de réponse de l'action prédéterminée. L'enceinte connectée peut par exemple allumer les indicateurs lumineux, ou bien faire varier leur intensité ou leur couleur lors de passages de paliers du niveau de réponse de l'action prédéterminée commandée.

En référence à la figure 9, l'enceinte connectée 1 comporte une pluralité de sources lumineuses comprenant chacune une ou plusieurs LEDs. Chaque source lumineuse présente la forme d'un segment lumineux 20 formant un secteur angulaire d'une couronne de segments lumineux 20. La couronne de segments lumineux 20 est située à l'intérieur de la couronne de microphones 10.

Certains des segments lumineux 20 sont associés à des microphones 10 avec lesquels ils sont alignés radialement : le segment lumineux 20a est associé au microphone 10a, le segment lumineux 20b est associé au microphone 10b, le segment lumineux 20c est associé au microphone 10c, etc.

L'émetteur lumineux émet un signal lumineux de retour qui dépend en temps réel du parcours sur le boîtier 2 du doigt de l'utilisateur lors du glissement de commande.

Sur la figure 9, on voit que l'utilisateur a tout d'abord posé son doigt sur le microphone 10a, puis, en passant par le microphone 10b, l'a fait glisser jusqu'au microphone 10c.

Ici, les segments lumineux 20 devant lesquels le doigt de l'utilisateur est passé lors du glissement de commande restent allumés, alors que le segment lumineux 20c associé au microphone 10c, où se situe le doigt de l'utilisateur, clignote.

Bien sûr, d'autres configurations de retour visuel sont possibles. Par exemple, on peut prévoir de faire clignoter plusieurs segments lumineux 20, ou bien d'utiliser une couleur différente lorsque le niveau de réponse de l'action prédéterminée atteint une butée maximale ou une butée minimale.

L'émetteur sensoriel pourrait produire un signal sensoriel de retour différent de ceux décrits ici, par exemple un signal vibratoire. Ce signal vibratoire pourrait par exemple être produit au moyen d'un dispositif dédié (dispositif de type vibreur), ou être produit, hors du spectre audible (infrasons), au moyen d'un haut-parleur (6) de l'appareil.

Bien entendu, l'invention n'est pas limitée aux modes de réalisation décrits mais englobe toute variante entrant dans le champ de l'invention telle que définie par les revendications.

Les actions prédéterminées commandées par les glissements de commande pourraient différer de celles décrites ici.

Les actions prédéterminées pourraient par exemple consister à faire défiler des stations radio, à faire avancer ou reculer la lecture d'un contenu audio, etc.

L'invention peut être mise en oeuvre dans tout équipement électronique comprenant des microphones et au moins un haut-parleur : assistant vocal, boîtier décodeur, tablette, *smartphone,* etc.

## Revendications

1. Equipement de restitution audio (1) comprenant :

   - un boîtier (2) sur lequel sont formés des trous (7), et des microphones (10) positionnés à l'intérieur du boîtier, chaque microphone étant en communication acoustique avec l'extérieur via l'un des trous ;
   - un haut-parleur (6) ;
   - des moyens d'émission agencés pour émettre via le haut-parleur un signal sonore de détection, le signal sonore de détection étant un signal sonore prédéterminé, le signal sonore de détection étant un signal normalement inaudible par un être humain, une fréquence du signal sonore de détection étant comprise dans la plage de fonctionnement du haut-parleur et des microphones ;
   - au moins un composant de traitement (12) agencé pour :

     o acquérir des signaux audio de détection produits par les microphones (10) à partir d'une capture du signal sonore de détection ;
     o détecter à partir des signaux audio de détection une succession d'occultations d'au moins deux microphones distincts ;
     o analyser la succession d'occultations de manière à détecter un glissement de commande (14 ; 15) réalisé sur le boîtier par un utilisateur entre au moins deux microphones distincts ;
     o commander au moins une action prédéterminée suite à la détection dudit glissement de commande.

2. Equipement de restitution audio selon la revendication 1, le composant de traitement (12) étant agencé pour :

   - détecter une première occultation d'un premier microphone ;
   - si une première durée de la première occultation est inférieure à une première durée prédéfinie, détecter une deuxième occultation d'un deuxième microphone distinct du premier microphone ;
   - si une deuxième durée entre une fin de la première occultation et un début de la deuxième occultation est inférieure à une deuxième durée prédéfinie, détecter le glissement de commande.

3. Equipement de restitution audio selon l'une des revendications précédentes, le composant de traitement (12) étant agencé pour comparer le glissement de commande avec au moins un glissement prédéfini d'une liste prédéfinie, pour déterminer un glissement prédéfini particulier auquel correspond le glissement de commande, et pour commander au moins une action prédéterminée associée au glissement prédéfini particulier.

4. Equipement de restitution audio selon la revendication 3, dans lequel chaque glissement prédéfini correspond à une succession d'occultations prédéfinie de microphones (10) disposés successivement.

5. Equipement de restitution audio selon la revendication 4, dans lequel les microphones (10) sont alignés, les glissements prédéfinis étant des glissements linéaires.

6. Equipement de restitution audio selon la revendication 4, dans lequel les microphones (10) sont disposés de manière circulaire, les glissements prédéfinis étant des glissements circulaires.

7. Equipement de restitution audio selon l'une des revendications 3 à 6, dans lequel au moins un glissement prédéfini associé à une action prédéterminée particulière est défini de manière à débuter nécessairement par une occultation d'un microphone initial prédéfini et/ou de manière à s'achever nécessairement par une occultation d'un microphone final prédéfini.

8. Equipement de restitution audio selon l'une des revendications 3 à 7, dans lequel la liste prédéfinie comprend plusieurs glissements prédéfinis dans un même sens mais de longueurs différentes.

9. Equipement de restitution audio selon l'une des revendications 3 à 8, dans lequel l'action prédéterminée associée à l'un au moins des glissements prédéfinis est une action à réponse progressive.

10. Equipement de restitution audio selon les revendications 8 et 9, dans lequel un niveau de réponse de l'action à réponse progressive dépend de la longueur dudit glissement prédéfini.

11. Equipement de restitution audio selon l'une des revendications 9 ou 10, dans lequel les glissements prédéfinis comprennent des glissements prédéfinis dans un premier sens et des glissements prédéfinis dans un deuxième sens, un glissement prédéfini dans le premier sens étant associé à une augmentation d'un niveau de réponse de l'action à réponse progressive alors qu'un glissement prédéfini dans le deuxième sens est associé à une réduction du niveau de réponse de l'action à réponse progressive.

12. Equipement de restitution audio selon l'une des revendications 9 à 11, dans lequel une variation d'un niveau de réponse de l'action à réponse progressive est plus importante si le glissement prédéfini est suivi d'une occultation maintenue d'un microphone à la fin du glissement prédéfini.

13. Equipement de restitution audio selon l'une des revendications 9 à 12, dans lequel l'action à réponse progressive est un réglage d'un volume de restitution sonore de l'équipement de restitution audio (1).

14. Equipement de restitution audio selon l'une des revendications précédentes, comprenant un émetteur sensoriel agencé pour fournir à l'utilisateur un retour sensoriel représentatif du glissement de commande et/ou d'un niveau de réponse de l'action prédéterminée.

15. Equipement de restitution audio selon la revendication 14, dans lequel l'émetteur sensoriel est agencé pour émettre un signal sensoriel de retour lorsque le niveau de réponse de l'action prédéterminée franchit un palier prédéfini ou atteint une butée maximale ou minimale.

16. Equipement de restitution audio selon la revendication 14, dans lequel l'émetteur sensoriel est agencé pour émettre un signal sensoriel de retour qui dépend d'un parcours sur le boîtier (2) d'un doigt de l'utilisateur lors du glissement de commande.

17. Equipement de restitution audio selon l'une des revendications 14 à 16, l'émetteur sensoriel étant un émetteur lumineux (20).

18. Equipement de restitution audio selon l'une des revendications 14 à 16, l'émetteur sensoriel étant un émetteur sonore (6).

19. Equipement de restitution audio selon l'une des revendications précédentes, l'équipement de restitution audio étant une enceinte connectée (1).

20. Procédé de commande d'un équipement de restitution audio selon l'une des revendications précédentes, comprenant les étapes de :

- émettre via le haut-parleur (6) le signal sonore de détection ;
- acquérir les signaux audio de détection produits par les microphones (10) ;
- détecter à partir des signaux audio de détection la succession d'occultations d'au moins deux microphones (10) distincts ;
- analyser la succession d'occultations de manière à détecter le glissement de commande réalisé sur le boîtier

(2) par l'utilisateur entre les au moins deux microphones (10) distincts ;
- commander l'action prédéterminée suite à la détection du glissement de commande.

21. Programme d'ordinateur comprenant des instructions qui conduisent le composant de traitement (12) de l'équipement de restitution audio (1) selon l'une des revendications 1 à 19 à exécuter les étapes du procédé de commande selon la revendication 20.

22. Support d'enregistrement lisible par ordinateur, sur lequel est enregistré le programme d'ordinateur selon la revendication 21.

**Patentansprüche**

1. Audiowiedergabegerät (1), umfassend:

   - ein Gehäuse (2), an dem Löcher (7) ausgebildet sind, und Mikrophone (10), die im Inneren des Gehäuses positioniert sind, wobei jedes Mikrophon über eines der Löcher in akustischer Kommunikation mit der Außenwelt steht;
   - einen Lautsprecher (6);
   - Sendemittel, die ausgebildet sind, über den Lautsprecher ein Tondetektionssignal auszusenden, wobei das Tondetektionssignal ein vorbestimmtes Tonsignal ist, wobei das Tondetektionssignal ein Signal ist, das von einem Menschen normalerweise nicht gehört werden kann, wobei eine Frequenz des Tondetektionssignals in einem Betriebsbereich des Lautsprechers und der Mikrophone liegt;
   - mindestens eine Verarbeitungskomponente (12), die ausgebildet ist, um:

     ◦ Audiodetektionssignale zu erfassen, die von den Mikrophonen (10) ausgehend von einem Erfassen des Tondetektionssignals erzeugt werden;
     ◦ eine Folge von Abdeckungen von mindestens zwei verschiedenen Mikrophonen anhand der Audiodetektionssignale zu detektieren;
     ◦ die Folge von Abdeckungen zu analysieren, um eine Steuerwischbewegung (14; 15) zu detektieren, die auf dem Gehäuse von einem Benutzer zwischen mindestens zwei verschiedenen Mikrophonen ausgeführt wurde;
     ◦ mindestens eine vorbestimmte Aktion nach der Detektion der genannten Steuerwischbewegung zu steuern.

2. Audiowiedergabegerät nach Anspruch 1, wobei die Verarbeitungskomponente (12) ausgebildet ist, um

   - eine erste Abdeckung eines ersten Mikrophons zu detektieren;
   - wenn eine erste Dauer der ersten Abdeckung geringer als eine vordefinierte erste Dauer ist, eine zweite Abdeckung eines zweiten Mikrophons, das von dem ersten Mikrophon verschieden ist, zu detektieren;
   - wenn eine zweite Dauer zwischen einem Ende der ersten Abdeckung und einem Anfang der zweiten Abdeckung geringer als eine vordefinierte zweite Dauer ist, die Steuerwischbewegung zu detektieren.

3. Audiowiedergabegerät nach einem der vorhergehenden Ansprüche, wobei die Verarbeitungskomponente (12) ausgebildet ist, die Steuerwischbewegung mit mindestens einer vordefinierten Wischbewegung einer vordefinierten Liste zu vergleichen, um eine besondere vordefinierte Wischbewegung zu bestimmten, der die Steuerwischbewegung entspricht, und um mindestens eine vorbestimmte Aktion zu steuern, die mit der besonderen vordefinierten Wischbewegung verbunden ist.

4. Audiowiedergabegerät nach Anspruch 3, bei dem jede vordefinierte Wischbewegung einer vordefinierten Folge von Abdeckungen von Mikrophonen (10) entspricht, die nacheinander angeordnet sind.

5. Audiowiedergabegerät nach Anspruch 4, bei dem die Mikrophone (10) ausgerichtet sind, wobei die vordefinierten Wischbewegungen lineare Wischbewegungen sind.

6. Audiowiedergabegerät nach Anspruch 4, bei dem die Mikrophone (10) kreisförmig angeordnet sind, wobei die vordefinierten Wischbewegungen kreisförmige Wischbewegungen sind.

7. Audiowiedergabegerät nach einem der Ansprüche 3 bis 6, bei dem mindestens eine vordefinierte Wischbewegung, die mit einer besonderen vorbestimmten Aktion verbunden ist, definiert ist, um notwendigerweise mit einer Abdeckung eines vordefinierten initialen Mikrophons zu beginnen und/oder um notwendigerweise mit einer Abdeckung eines vordefinierten finalen Mikrophons zu enden.

8. Audiowiedergabegerät nach einem der Ansprüche 3 bis 7, bei dem die vordefinierte Liste mehrere vordefinierte Wischbewegungen in eine selbe Richtung aber von unterschiedlicher Länge umfasst.

9. Audiowiedergabegerät nach einem der Ansprüche 3 bis 8, bei dem die vorbestimmte Aktion, die mit mindestens einer der vordefinierten Wischbewegungen verbunden ist, eine Aktion mit progressiver Antwort ist.

10. Audiowiedergabegerät nach den Ansprüchen 8 und 9, bei dem ein Antwortniveau der Aktion mit progressiver Antwort von der Länge der genannten vordefinierten Wischbewegung abhängt.

11. Audiowiedergabegerät nach einem der Ansprüche 9 oder 10, bei dem die vordefinierten Wischbewegungen vordefinierte Wischbewegungen in eine erste Richtung und vordefinierte Wischbewegungen in eine zweite Richtung umfassen, wobei eine vordefinierte Wischbewegung in die erste Richtung mit einer Erhöhung eines Antwortniveaus der Aktion mit progressiver Antwort verbunden ist, während eine vordefinierte Wischbewegung in die zweite Richtung mit einer Reduzierung des Antwortniveaus der Aktion mit progressiver Antwort verbunden ist.

12. Audiowiedergabegerät nach einem der Ansprüche 9 bis 11, bei dem eine Variation eines Antwortniveaus der Aktion mit progressiver Antwort größer ist, wenn auf die vordefinierte Wischbewegung eine gehaltene Abdeckung eines Mikrophons am Ende der vordefinierten Wischbewegung folgt.

13. Audiowiedergabegerät nach einem der Ansprüche 9 bis 12, bei dem die Aktion mit progressiver Antwort eine Einstellung einer Lautstärke einer Tonwiedergabe des Audiowiedergabegeräts (1) ist.

14. Audiowiedergabegerät nach einem der vorhergehenden Ansprüche, umfassend einen sensorischen Sender, der ausgebildet ist, dem Benutzer ein sensorisches Feedback zu liefern, das repräsentativ für die Steuerwischbewegung und/oder das Antwortniveau der vorbestimmten Aktion ist.

15. Audiowiedergabegerät nach Anspruch 14, bei dem der sensorische Sender ausgebildet ist, ein sensorisches Feedbacksignal zu senden, wenn das Antwortniveau der vorbestimmten Aktion eine vordefinierte Stufe überschreitet oder einen maximalen oder minimalen Anschlag erreicht.

16. Audiowiedergabegerät nach Anspruch 14, bei dem der sensorische Sender ausgebildet ist, ein sensorisches Feedbacksignal zu senden, das von einem Pfad eines Fingers des Benutzers auf dem Gehäuse (2) während einer Steuerwischbewegung abhängt.

17. Audiowiedergabegerät nach einem der Ansprüche 14 bis 16, wobei der sensorische Sender ein Lichtsender (20) ist.

18. Audiowiedergabegerät nach einem der Ansprüche 14 bis 16, wobei der sensorische Sender ein Tonsender (6) ist.

19. Audiowiedergabegerät nach einem der vorhergehenden Ansprüche, wobei das Audiowiedergabegerät ein Smart Speaker (1) ist.

20. Verfahren zum Steuern eines Audiowiedergabegeräts nach einem der vorhergehenden Ansprüche, umfassend die Schritte:

   - Senden des Tondetektionssignals über den Lautsprecher (6);
   - Erfassen der von den Mikrophonen erzeugten Audiodetektionssignale;
   - Detektieren der Folge von Abdeckungen von mindestens zwei verschiedenen Mikrophonen (10) anhand der Audiodetektionssignale;
   - Analysieren der Folge von Abdeckungen, um die Steuerwischbewegung zu detektieren, die auf dem Gehäuse (2) von dem Benutzer zwischen den mindestens zwei verschiedenen Mikrophonen (10) ausgeführt wurde;
   - Steuern der vorbestimmten Aktion nach der Detektion der Steuerwischbewegung.

21. Computerprogramm, umfassend Anweisungen, die die Verarbeitungskomponente (12) des Audiowiedergabegeräts (1) nach einem der Ansprüche 1 bis 19 dazu veranlassen, die Schritte des Steuerverfahrens nach Anspruch 20 auszuführen.

**22.** Computerlesbarer Aufzeichnungsträger, auf dem das Computerprogramm nach Anspruch 21 gespeichert ist.

**Claims**

1. Audio playback equipment (1) comprising:

   · a housing (2) having holes (7) formed therein, and microphones (10) positioned inside the housing, each microphone being in acoustic communication with the outside via a respective one of the holes;
   · a loudspeaker (6);
   · emitter means arranged to emit a sound detection signal via the loudspeaker, the sound detection signal being a predetermined sound signal, the sound detection signal being a signal that is normally inaudible for a human being, a frequency of the sound detection signal lying within the operating range of the loudspeaker and of the microphones;
   · at least one processor component (12) arranged:

      o to acquire audio detection signals produced by the microphones (10) as a result of picking up the sound detection signal;
      o from the audio detection signals, to detect a run of maskings in which at least two distinct microphones are masked in succession;
      o to analyze the detected run of maskings so as to detect a command slide (14; 15) made by a user on the housing via at least two distinct microphones; and
      o to cause at least one predetermined action to take place as a result of detecting said command slide.

2. Audio playback equipment according to claim 1, wherein the processor component (12) is arranged:

   · to detect a first masking of a first microphone;
   · if a first duration of the first masking is less than a first predefined duration, to detect a second masking of a second microphone distinct from the first microphone; and
   · if a second duration between the end of the first masking and the beginning of the second masking is less than a second predefined duration, to detect the command slide.

3. Audio playback equipment according to either preceding claim, wherein the processor component (12) is arranged to compare the command slide with at least one predefined slide in a predefined list, in order to determine a particular predefined slide that corresponds to the command slide, and in order to cause at least one predetermined action that is associated with the particular predefined slide to take place.

4. Audio playback equipment according to claim 3, wherein each predefined slide corresponds to a predefined run of maskings of microphones (10) that are arranged in succession.

5. Audio playback equipment according to claim 4, wherein the microphones (10) are in alignment, and the predefined slides are linear slides.

6. Audio playback equipment according to claim 4, wherein the microphones (10) are arranged in circular manner, and the predefined slides are circular slides.

7. Audio playback equipment according to any one of claims 3 to 6, wherein at least one predefined slide that is associated with a particular predetermined action is defined in such a manner as to begin necessarily by masking a predefined initial microphone and/or in such a manner as to end necessarily by masking a predefined final microphone.

8. Audio playback equipment according to any one of claims 3 to 7, wherein the predefined list comprises a plurality of predefined slides that are in the same direction but of lengths that are different.

9. Audio playback equipment according to any one of claims 3 to 8, wherein the predetermined action associated with at least one of the predefined slides is a progressive-response action.

10. Audio playback equipment according to claims 8 and 9, wherein the progressive-response action has a response level that depends on the length of said predefined slide.

11. Audio playback equipment according to claim 9 or claim 10, wherein the predefined slides comprise predefined slides in a first direction and predefined slides in a second direction, a predefined slide in the first direction being associated with increasing a response level of the progressive-response action, and a predefined slide in the second direction being associated with reducing the response level of the progressive-response action.

12. Audio playback equipment according to any one of claims 9 to 11, wherein variation in the response level of the progressive-response action is greater if the predefined slide is followed by the masking of a microphone being maintained at the end of the predefined slide.

13. Audio playback equipment according to any one of claims 9 to 12, wherein the progressive-response action is adjusting the volume of sound being played back by the audio playback equipment (1).

14. Audio playback equipment according to any preceding claim, including a sensory emitter arranged to supply the user with sensory feedback that is representative of the command slide and/or of the response level of the predetermined action.

15. Audio playback equipment according to claim 14, wherein the sensory emitter is arranged to emit a sensory feedback signal when the response level of the predetermined action crosses a predefined level or reaches a maximum or minimum end stop.

16. Audio playback equipment according to claim 14, wherein the sensory emitter is arranged to emit a sensory feedback signal that depends on the path travelled by a user's finger on the housing (2) while making a command slide.

17. Audio playback equipment according to any one of claims 14 to 16, wherein the sensory emitter is a light emitter (20) .

18. Audio playback equipment according to any one of claims 14 to 16, wherein the sensory emitter is a sound emitter (6) .

19. Audio playback equipment according to any preceding claim, wherein the audio playback equipment is a smartspeaker (1).

20. A control method for controlling audio playback equipment according to any preceding claim, the method comprising the steps of:

· emitting the sound detection signal via the loudspeaker (6);
· acquiring the audio detection signals produced by the microphones (10);
· from the audio detection signals, detecting a run of maskings in which at least two distinct microphones (10) are masked in succession;
· analyzing the run of maskings so as to detect a command slide made by the user on the housing (2) via the at least two distinct microphones (10); and
· causing the predetermined action to take place as a result of detecting the command slide.

21. A computer program including instructions for causing the processor component (12) of the audio playback equipment (1) according to any one of claims 1 to 19 to execute the steps of the control method according to claim 20.

22. A computer-readable storage medium storing the computer program according to claim 21.

Fig. 1

Fig. 2

Fig. 3

Fig. 4

Fig. 5

Fig. 6

Fig. 7

Fig. 8

Fig. 9

**EP 4 086 751 B1**

## RÉFÉRENCES CITÉES DANS LA DESCRIPTION

**Documents brevets cités dans la description**

- EP 3149966 A1